(19) Europäisches Patentamt / European Patent Office / Office européen des brevets

(11) **EP 1 972 659 B1**

(12) **EUROPEAN PATENT SPECIFICATION**

(45) Date of publication and mention of the grant of the patent:
**24.02.2016 Bulletin 2016/08**

(21) Application number: **06842898.6**

(22) Date of filing: **19.12.2006**

(51) Int Cl.:
*C08L 77/06* ^(2006.01)   *C08L 53/02* ^(2006.01)
*C08K 7/14* ^(2006.01)   *C08L 77/02* ^(2006.01)
*C08L 77/00* ^(2006.01)   *C08J 5/08* ^(2006.01)
*C08J 5/04* ^(2006.01)   *B29L 31/44* ^(2006.01)
*B29C 45/00* ^(2006.01)   *B29K 77/00* ^(2006.01)

(86) International application number:
**PCT/JP2006/325294**

(87) International publication number:
**WO 2007/080754 (19.07.2007 Gazette 2007/29)**

(54) **POLYAMIDE RESIN COMPOSITION FOR PORTABLE ELECTRONIC DEVICE AND MOLDED ARTICLE FOR PORTABLE ELECTRONIC DEVICE**

POLYAMIDHARZZUSAMMENSETZUNG FÜR TRAGBARE ELEKTRONISCHE VORRICHTUNG UND FORMKÖRPER FÜR TRAGBARE ELEKTRONISCHE VORRICHTUNG

COMPOSITION DE RESINE POLYAMIDE DESTINEE A UN APPAREIL ELECTRONIQUE PORTABLE ET ARTICLE MOULE DESTINE A UN APPAREIL ELECTRONIQUE PORTABLE

(84) Designated Contracting States:
**GB**

(30) Priority: **13.01.2006 JP 2006006756**
**11.04.2006 JP 2006108519**

(43) Date of publication of application:
**24.09.2008 Bulletin 2008/39**

(73) Proprietor: **MITSUBISHI ENGINEERING-PLASTICS CORPORATION**
**Tokyo 105-0021 (JP)**

(72) Inventors:
• **KUMAZAWA, Teruhisa**
**Hiratsuka-shi, Kanagawa 254-0016 (JP)**
• **TAKANO, Takahiro**
**Hiratsuka-shi, Kanagawa 254-0016 (JP)**
• **MORIMOTO, Kei**
**Hiratsuka-shi, Kanagawa 254-0016 (JP)**

(74) Representative: **Hoffmann Eitle**
**Patent- und Rechtsanwälte PartmbB**
**Arabellastraße 30**
**81925 München (DE)**

(56) References cited:
**EP-A1- 0 458 470      EP-A1- 1 939 254**
**EP-A2- 0 246 620      EP-A2- 0 376 616**
**EP-A2- 1 312 647      WO-A2-2008/070157**
**JP-A- 7 018 186       JP-A- 02 173 047**
**JP-A- 04 227 959      JP-A- 07 041 669**
**JP-A- 09 216 245      JP-A- 10 219 026**
**JP-A- 62 268 612      JP-A- 2003 213 011**
**JP-A- 2004 168 849**

Remarks:
The file contains technical information submitted after the application was filed and not included in this specification

EP 1 972 659 B1

**Description**

TECHNICAL FIELD

The present invention relates to a polyamide resin composition for a portable electronic device and to a molded article for a portable electronic device.

BACKGROUND ART

In personal computers and notebook personal computers which are to be electrically connected to outlets, flame resistance is one of the properties required. In the case of PDAs (personal digital assistants), portable game machines and cellular phones which are driven by batteries, on the other hand, flame resistance is not always required, but instead drop impact resistance is an important characteristic because of their possibility of being dropped while being handled or carried. When it is permissive to increase the thickness of the article, a non-reinforced polycarbonate or acrylonitrile-butadiene-styrene copolymer resin having excellent impact resistance is usable. A composition containing the above resin and, compounded therein, a small amount of filler may also be used. When an impact resistant material having a low rigidity is used, however, it is necessary to provide a large space in order to prevent damages of parts provided therein due to deformation. For this reason, a portable electronic device of a folding or sliding type must be unavoidably designed to have a large thickness. In portable electronic devices in which convenience while being carried is one of the important characteristics, however, there is a strong demand for thin design of articles. As a countermeasure for the above demand, there is an option to use magnesium thixomolding, a dicast metal or an iron plate work.
Yet, hitherto, there has been a demand for a thermoplastic injection moldable material which has an excellent mass-production efficiency and which is capable of affording an article with high rigidity, high strength, high impact strength and, yet, low warpage. The present invention pertains to a polyamide resin composition and a molded article thereof having the above characteristics.
A variety of resin compositions have so far been proposed in which a glass fiber is compounded to obtain various physical properties. For example, a thermoplastic resin composition which has solved a problem of warpage of a molded article by compounding a powder of a glass fiber with an aspect ratio (ellipticity), defined by the formula shown below, of 1.2 or more in a thermoplastic resin is proposed (Patent Document 1). More particularly, the glass fiber used has a cross-section having an elliptical (nearly rectangular parallelepiped) shape or a cocoon-like shape, and the thermoplastic resin used is, for example, nylon-6, a saturated polyester resin or a polycarbonate resin. The known resin composition is, however, not fully satisfactory particularly with respect to tensile strength.

$$\text{Aspect ratio} = \text{(Major axis length D2 of a cross-section}$$
$$\text{of the glass fiber)/(Minor axis length D1 of a cross-section}$$
$$\text{of the glass fiber)}.$$

In the case of a high rigidity thermoplastic material such as a reinforced polyamide MXD6 resin (polymetaxylylene adipamide), the tensile strength thereof can be significantly improved by reinforcement with a glass fiber having a circular cross-section. For example, a material with tensile strength of 220 MPa or more is obtainable using a reinforcement of 40 % or more, and a material with tensile strength of 250 MPa or more is obtainable using a reinforcement of 50 % or more. By reinforcement with only a glass fiber having a circular cross-section by itself, however, warpage is high in the case of a thin molded article. Namely, when a plate having a thickness of about 1 mm is produced by molding, the molded plate causes significant warpage. In view of this problem, a material is proposed in which a glass fiber having a circular cross-section is used together with mica as a flat plate filler to reduce warpage (Patent Document 2). In this case, however, mechanical properties such as impact strength and tensile strength are deteriorated as compared with a case where a glass fiber having a circular cross-section is used by itself. By the way, the tensile strength greatly decreases to 150 MPa.
A resin molded article is proposed in which chopped strands of a cocoon-shaped glass fiber having an aspect ratio of 3 are compounded in a polybutylene terephthalate resin, an acrylonitrile-styrene copolymer resin or an acrylonitrile-butadiene-styrene copolymer resin (Patent Document 3). In this case, the maximum tensile strength is attained when 60 % by weight of chopped strands of glass fibers are compounded in a polybutylene terephthalate resin. The maximum tensile strength is, however, as low as 172 MPa. Further, the prior art does not mention anything about dimensional stability such as warpage.
As a material which is low in warpage and yet retains high strength, there is a proposal in which a glass fiber having a circular cross-section and a glass fiber having a flattened cross-section are compounded in polyamide 66 (Patent Document 4). In the proposed resin composition, however, the compounding amount of the glass fibers is 30 % by weight in total and the maximum tensile strength is only 141 MPa. Further, the glass fiber having a circular cross-section that is actually used has an aspect ratio of 2.

A composition in which two types of glass fibers having aspect ratios of 1.8 and 2.3 are compounded in a polybutylene terephthalate resin is also proposed (Patent Document 5). Compositions having compounding amounts of the glass fibers of up to 40 % by weight are evaluated for warpage of molded articles obtained therefrom. The maximum tensile strength attained in the prior art is only 164 MPa.

A composition in which flattened glass is compounded in polyamide 9T is proposed (Patent Document 6). It is reported that a composition containing about 60 % by weight of a flattened glass fiber having an aspect ratio of 2.0 ±0.3 shows a superior low-warpage property as compared with compositions containing a glass fiber having a circular cross-section. It is also reported that polyamide 9MT of a base resin is excellent with respect to a sliding property and that the addition of a glass fiber does not bring about a difference. With regard to the maximum tensile strength, a composition having a compounding amount of the glass fiber of about 55 % by weight affords a value of 190 MPa. No methods are proposed in the prior art to obtain strength greater than 190 MPa.

A composition in which polyamide MXD6 is used together with a modified polyolefin, a super high molecular weight polyethylene and a flattened glass fiber (Patent Document 7). An end article molded from the proposed composition is a gear. Further, the glass fiber concretely evaluated is only a cocoon-shaped glass fiber having an aspect ratio of about 2. No evaluation is made on sliding property, either. Additionally, the prior art does not mention anything about a change of physical property concerning warpage.

A casing for an electronic device made of a material containing a crystalline aromatic polyamide (polyamide MXD6), an amorphous polyamide, polyamide 6 and a fibrous reinforcing material such as a glass fiber is proposed (Patent Document 8). Details of the glass fiber used are unknown, though it is inferred that an ordinary glass fiber having a circular cross-section is used. In any way, while it is possible that the proposed material may have high strength, no modification of the glass fiber is suggested to attain low-warpage. Only reported is that a certain degree of low-warpage is resulted from the amorphous polyamide.

Patent Document 1: Japanese Patent Application Laid-open (KOKAI) No. 07-18186
Patent Document 2: Japanese Patent Application Laid-open (KOKAI) No. 01-263151
Patent Document 3: Japanese Patent Application Laid-open (KOKAI) No. 62-268612
Patent Document 4: Japanese Patent Application Laid-open (KOKAI) No. 10-219026
Patent Document 5: Japanese Patent Application Laid-open (KOKAI) No. 02-173047
Patent Document 6: Japanese Patent Application Laid-open (KOKAI) No. 2003-82228
Patent Document 7: Japanese Patent Application Laid-open (KOKAI) No. 2003-201398
Patent Document 8: Japanese Patent Application Laid-open (KOKAI) No. 2004-168849

EP 1 939 254 A1 relates to a material for laser welding which comprises a thermoplastic resin composition containing (A) a thermoplastic resin and (B) a glass fiber having a non-circular cross-section with the ratio between the long diameter and the short diameter in the cross-section at right angles to the length direction being from 1.2 to 10.

As described in the foregoing, no reinforced thermoplastic resin compositions having a tensile strength of 200 MPa or more, yet a high modulus of elasticity and a high impact strength, being low in warpage have ever been known.

DISCLOSURE OF THE INVENTION

Problems to be Solved by the Invention:

The present invention has been made in view of the above conventional problems. An object of the present invention is to provide a polyamide resin composition having particularly excellent strength and low warpage by virtue of being compounded with a glass fiber and suited as a material for portable electronic devices that are becoming thinner and lighter in weight in recent years.

Means for Solving the Problem:

As a result of the present inventors' earnest study for achieving the above object, it has been found that when using a glass fiber having a specific flattened cross-sectional shape as a reinforcing material for a polyamide resin or a base resin, such as polyamide MXD6 using metaxylylenediamine as a high strength component, it can be realized to develop such a material capable of exhibiting not only both high rigidity and high impact strength required in portable electronic devices but also suitable low warpage. It has also been found that the above material can afford a structural molded article for portable electronic devices. It has been further found that in order for a material to be usable, as a substitute for metals, for parts of a portable electronic device, it is important that the material should have a high tensile strength.

That is, in a first aspect of the present invention, there is provided a polyamide resin composition for a portable electronic device, comprising: (A) a polyamide resin, (B) a glass fiber having an elongated cross-section with an aspect ratio (ellipticity) of 2.5 or more, said aspect ratio being defined by the formula shown below, and optionally (C) a glass fiber having a circular cross-section with a diameter of 3 to 30 μm,

the ratio (by weight) of the component (B) to the component (c) being 3:7 to 10:0,

the proportion of the component (A) being 60 to 34 % by weight, and

the proportion of the component (B) or the proportion of the sum of the components (B) and (C) being 40 to 66 % by weight with the proviso that the total sum of the above components is 100 % by weight,

which polyamide resin composition shows a tensile strength of 200 MPa or higher as measured for an ISO test piece thereof according to ISO 527-1, -2, wherein the polyamide resin of component (A) consists of of at least one polyamide resin selected from the group consisting of polyhexamethylene terephthalamide (polyamide 6T), polyhexamethylene isophthalamide (polyamide 6I), polymetaxylylene adipamide (polyamide MXD6), polymetaxylylene dodecamide (polyamide MXD10), polyamide 9T, polymetaxylylene adipamide/polyparaxylylene adipamide copolymer (polyamide MP6), polymetaxylylene adipamide/polymetaxylylene isophthalamide copolymer (polyamide MXD6/MXDI), polyhexamethylene terephthalamide/poly-2-methyl-pentamethylene terephthalamide copolymer (polyamide 6T/M5T), and polyhexamethylene terephthalamide/polyhexamethylene isophthalamide copolymer (polyamide 6T/6I).

$$\text{Aspect ratio} = \text{(Major axis length D2 of the cross-section of the glass fiber)/(Minor axis length D1 of the cross-section of the glass fiber)}.$$

In a second aspect of the present invention, there is provided a portable electronic device part comprising a molded article of a resin composition as defined above, the thickness of a flat portion of said molded article, excluding ribs thereof, being 1.2 mm or less on average.

Effect of the Invention:

According to the present invention, there is provided a polyamide resin composition which has excellent mechanical properties, such as strength and modulus of elasticity, and low warpage and which is suited for use as a material for portable electronic device parts.

BEST MODE FOR CARRYING OUT THE INVENTION

The present invention will be described in detail below. The resin composition of the present invention comprises, as essential components, (A) a polyamide resin and (B) a glass fiber having an elongated cross-section and may comprise, as an optional component, (C) a glass fiber having a circular cross-section.

(A) Polyamide resin

The polyamide resin used in the present invention is a resin which is generally obtained by polycondensation of a lactam having a four- or more membered ring or a ω-amino acid, or by polycondensation of a dibasic acid with a diamine. In order to realize a high heat resistance, a high strength and a high rigidity which are required in a material serving as a substitute for a metal, suitably used is a polyamide resin in which the number of the methylene groups in the repeating unit of the polymer is 20 or less, particularly 12 or less.

Examples of the lactam having a four- or more membered ring include ε-caprolactam and ω-laurolactam. Examples of the ω-amino acid include ε-caproic acid, ω-aminocaprylic acid and ω-aminolauric acid. As the dibasic acid, there may be mentioned α,ω-straight chain aliphatic dibasic acids such as glutaric acid, adipic acid, azelaic acid, sebacic acid, suberic acid, dodecanedioic acid, isophthalic acid (I) and terephthalic acid (T). Above all, adipic acid, sebacic acid, suberic acid and dodecanedioic acid are preferred and adipic acid is particularly preferred. Examples of the diamine include tetramethylenediamine, nonanediamine, hexamethylenediamine, methylpentanediamine, octamethylenediamine, diaminobutane, metaxylylenediamine (MXDA) and paraxylylenediamine. A plurality of these diamines may be used in the form of a mixed diamine.

Specific examples of the above-described polyamide resin include polyhexamethylene terephthalamide (polyamide 6T), polyhexamethylene isophthalamide (polyamide 6I), polymetaxylylene adipamide (polyamide MXD6), polymetaxylylene dodecamide (polyamide MXD10), and polyamide 9T. In the present invention, copolymers of the above polyamides may be also used. Specific examples of such a copolymer include polyamide 6I/6T.

In order to meet the hereinafter described physical property (tensile strength of 200 MPa or more) required in the present invention, it is preferred that the polyamide resin be properly selected.

A polyamide resin comprising at least 30 mol % of repeating units derived from an aromatic monomer, namely polyhexamethylene terephthalamide (polyamide 6T), polyhexamethylene isophthalamide (polyamide 6I), polymetaxylylene adipamide (polyamide MXD6), polymetaxylylene dodecamide (polyamide MXD10), and polyamide 9T is used. By containing repeating units derived from an aromatic monomer, the polyamide obtained has a high rigidity so that it is easy to attain a tensile strength of 200 MPa or more. When the content of repeating units derived from an aromatic monomer is less than 30 mol %, such an effect is not clearly observed.

The copolymer of the above-described polyamides is a polymetaxylylene adipamide/polyparaxylylene adipamide copolymer (polyamide MP6), a polymetaxylylene adipamide/polymetaxylylene isophthalamide copolymer (polyamide MXD6/MXDI), a polyhexamethylene terephthalamide/poly-2-methylpentamethylene terephthalamide copolymer (polyamide 6T/M5T), or a polyhexamethylene terephthalamide/polyhexamethylene isophthalamide copolymer (polyamide 6T/6I)

As a polyamide resin having high rigidity and preferred as a base resin, there may be mentioned a polyamide MX resin. The polyamide MX resin is a polyamide resin obtained by polycondensation of a xylylenediamine with an $\alpha,\omega$-dibasic acid. More specifically, the polyamide MX resins may be those which are obtained by polycondensation of metaxylylenediamine alone or a mixed xylylenediamine composed of 50 mol % or more of metaxylylenediamine and 50 mol % or less of paraxylylenediamine with an $\alpha,\omega$-straight chained aliphatic dibasic acid having 6 to 12 carbon atoms or an aromatic dibasic acid. By containing a paraxylylene component, the polyamide MX resin has an increased crystallization speed so that the molding cycle time can be shortened. Thus, if such properties are desired, it is preferable to use a mixed xylylenediamine as the xylylenediamine.

The polyamide resin used in the present invention generally has a relative viscosity of 2.0 to 4.0, preferably 2.0 to 2.7. When the relative viscosity is excessively low (this means that the resin has a low molecular weight), physical properties of the resin are not fully satisfactory. Too high a relative viscosity, on the other hand, causes a difficulty in molding. Further, it is difficult to prepare a polyamide resin having a relative viscosity greater than 4.0. Incidentally, as used in the present specification, the term "relative viscosity of the polyamide resin" is intended to refer to the viscosity as measured for a solution having a resin concentration of 1 g/100 mL using 96 % sulfuric acid as a solvent.

Two or more polyamide resins may be mixed in the present invention. Further, a polyamide may be mixed with another thermoplastic resin in the form of a polymer alloy. For example, a polyamide MXD resin may be alloyed with another polyamide resin for the purpose of improving a surface appearance of the polyamide MXD resin. Further, for the purpose of reducing a molding cycle time, a polyamide MXD resin may be mixed with a high melting point polyamide resin such as a polyamide. Furthermore, for the purpose of improving a chemical resistance of a polyamide resin used as a major component, the polyamide resin may be alloyed with a modified polypropylene resin, a polyethylene resin or a PPS resin. In addition, the polyamide resin may be alloyed with PPE, an AS resin, an ABS resin, PET, etc. for improving the impact property.

(B) Glass fiber having elongated cross-section

The glass fiber with an elongated cross-section used in the present invention has an aspect ratio, defined by the formula shown below, of 2.5 or more.

$$\text{Aspect ratio} = \frac{\text{(Major axis length D2 of the cross-section of the glass fiber)}}{\text{(Minor axis length D1 of cross-section of the glass fiber)}}$$

The above aspect ratio (or major axis length and minor axis length) may be a nominal value specified by the manufacturer. When such a nominal value is not available, the aspect ratio may be easily determined from measured values obtained using a microscope.

As the glass fiber having an elongated cross-section, there may be mentioned, for example, those which are rectangular parallelepiped, nearly rectangular oval, elliptical or cocoon-like (constricted in the middle portion in the longitudinal direction) in cross-section. Such glass fibers are disclosed in the afore-mentioned Patent Document 1 and are well known. A cocoon shaped glass fiber is constricted in the middle and, hence, the middle portion has low strength. Therefore, the cocoon shaped glass fiber occasionally breaks along the middle thereof. Also, there is a possibility that the constricted portion is not in close contact with a resin. Accordingly, glass fibers having a rectangular parallelepiped, nearly rectangular oval or elliptical cross-sectional shape are preferred.

When a glass fiber having an aspect ratio of less than 2.5 is used, the problem of warpage in plate-like molded articles becomes worse. The aspect ratio is preferably 2.5 to 10.0, more preferably greater than 3.0 but not greater than 10.0, particularly preferably 3.1 to 6.0. When the aspect ratio is extremely high, the glass fiber is occasionally ground by the load applied thereto during processing such as mixing with other components, kneading and molding, so that the aspect ratio of the glass fiber actually contained in the molded articles is reduced. For this reason, it is not necessary to use a glass fiber having an extremely high aspect ratio.

The size of the glass fiber having an elongated cross-section is optional. However, it is preferred that the minor axis length D1 of the cross-section of the glass fiber be 0.5 to 25 $\mu$m and that the major axis length D2 of cross-section of the glass fiber be 1.25 to 250 $\mu$m. When the glass fiber is excessively thin, there is a possibility that the spinning thereof is difficult. When the glass fiber is excessively thick, there is a possibility that the molded articles have a reduced strength due to a reduction of the contact area between the fiber and the resin. The minor axis length D1 is preferably 3 $\mu$m or more. It is more preferred that the minor axis length D1 be 3 $\mu$m or more and the aspect ratio be greater than 3.

The glass fiber having an elongated cross-section may be produced by methods disclosed in, for example, Japanese Patent Publication (KOKOKU) No. 03-59019, Japanese Patent Publication (KOKOKU) No. 04-13300 and Japanese Patent Publication (KOKOKU) No. 04-32775. Particularly preferred is a glass fiber with an elongated cross-section produced by using an orifice plate which has a bottom surface provided with a plurality of orifices and which is provided with a projected edge surrounding outlets of the plurality of orifices and extending downward from the bottom surface of the orifice plate, or by using a nozzle tip for spinning a glass fiber with a deformed cross-section which has one or a plurality of orifice holes and a plurality of projected edges extending downward from an outer periphery at a distal end thereof.

(C) Glass fiber having circular cross-section

The glass fiber having a circular cross-section (aspect ratio: 1) used in the present invention has a diameter of 3 to 30 $\mu$m. Such a glass fiber may be commercially available in the form of chopped strands. For reasons of easiness of availability, a glass fiber having a diameter of 6 to 17 $\mu$m is preferred.

Glass fiber (B) and glass fiber (C)

Each of the above-described glass fiber (B) and glass fiber (C) may be arbitrarily composed but preferably has a composition which can be formed into a glass fiber from a molten glass. To be more specific, there may be mentioned an E glass composition, a C glass composition, an S glass composition and alkali-resistant glass composition. The tensile strength of the glass fiber is also arbitrary but is generally 290 kg/mm$^2$ or more. Among the above glass compositions, the E glass composition is preferred for reasons of easiness in availability.

The above-described glass fiber (B) and glass fiber (C) are each preferably surface treated with a silane coupling agent such as $\gamma$-methacryloxypropyltrimethoxysilane, $\gamma$-glycidoxypropyltrimethoxysilane and $\gamma$-aminopropyl triethoxysilane. The deposition amount of the silane coupling agent is generally 0.01 % by weight or more based on the weight of the glass fiber. Further, if necessary, the glass fiber may be subjected to other surface treatments. Examples of the surface treating agent include a lubricating agent such as an aliphatic amide compound and a silicone oil; an antistatic agent such as a quaternary ammonium salt; a resin having a film forming property such as an epoxy resin and an urethane resin; and a surface treating agent in which a resin having a film forming property is used together with a heat stabilizing agent, a flame retarding agent, etc.

Resin composition

In the resin composition of the present invention, the using proportion of the above-described components (A) to (C) (total amount of the above-described components is 100 % by weight) is as follows. Thus, the proportion of the component (B) to the component (C) is 3:7 to 10:0 (weight ratio). The component (C) is an optional ingredient but is preferably used together with the component (B) from the viewpoint of tensile strength. However, when the amount of the component (C) relative to the component (B) is higher than the above range, the content of the component (B) in the resin composition is so reduced that the effect of suppressing the warpage of plate-like molded articles is not effectively obtained. The proportion of the component (A) is 60 to 34 % by weight, and the proportion of the component (B) or the proportion of the sum of the components (B) and (C) is 40 to 66 % by weight. When the proportion of the component (B) or the proportion of the sum of the components (B) and (C) is less than 40 % by weight, the effect of reinforcement is small and the tensile strength is insufficient. On the other hand, when the proportion exceeds 66 % by weight, the compounding of the components is difficult.

From the viewpoint of suppression of the warpage of plate-like molded articles, it is particularly preferred that the amount of the component (B) be 25 to 66 % by weight based on a total amount of the components (A) and (B) or on a total amount of the components (A), (B) and (C).

In addition to the above-described essential components, the resin composition of the present invention can be compounded with an additive or additives as long as the desired characteristics of the composition of the present invention are not adversely affected. To be more specific, a nucleating agent is preferably incorporated into the composition for the purpose of increasing the crystallization speed and improving the molding efficiency. As the nucleating agent, there may be mentioned, in general, an inorganic nucleating agent such as talc and boron nitride, though an organic nucleating agent may be also used. The addition amount of the nucleating agent is as follows. Namely, in the case of boron nitride or an organic nucleating agent, the addition amount is generally 0.001 to 6 parts by weight, preferably 0.01 to 1 part by weight, per 100 parts by weight of a total amount of the components (A) and (B) or on a total amount of the components (A), (B) and (C). An excessively small addition amount fails to give the desired nucleating effect, while an excessively large addition amount results in "cost-up" because of expensiveness of the material. In the case of talc, the addition amount is generally 0.1 to 8 parts by weight, preferably 0.3 to 2 parts by weight. In the case of the other inorganic nucleating agents, the addition amount is generally 0.3 to 8 parts by weight, preferably 0.5 to 4 parts by weight. In the case of talc and other inorganic nucleating agents, an excessively small addition amount fails to give the desired nucleating effect, while an excessively large addition amount results in a reduction of strength and impact value because the nucleating agent will act as a foreign matter. It is particularly preferable to use talc having an average particle diameter of 2 $\mu$m or less in an amount of 0.1 to 8 parts by weight.

A releasing agent is preferably incorporated into the resin composition of the present invention for the purpose of improving the releasability in molding. In this case, it is preferable to use the releasing agent in a relatively large amount so that an effect of improving slidability may be additionally obtained. As the releasing agent, there may be mentioned long chain aliphatic carboxylic acids having at least 14 carbon atoms, such as stearic acid and palmitic acid, and derivatives thereof (such as esters, alkali metal salts, alkaline earth metal salts and amides thereof); higher aliphatic alcohols having at least 14 carbon atoms, such as stearyl alcohol, and derivatives thereof; amines having at least 14 carbon atoms, such as stearyl amine, and derivatives thereof; waxes such as a low molecular weight polyethylene wax and a paraffin wax; silicone oils; and silicone rubbers. The addition amount is generally 0.03 to 1.5 parts by weight, preferably 0.03 to 0.5 part by weight, per 100 parts by weight of a total amount of the components (A) and (B) or on a total amount of the components (A), (B) and (C).

The resin composition of the present invention is preferably compounded with (D) a hydrogenated product of a block copolymer comprised of (a) a vinyl aromatic compound polymer block and (b) a conjugated diene-based compound polymer block for the purpose of improving the impact resistance. The content of the component (D) is generally 0.5 to 20 % by weight, preferably 1 to 15 % by weight, based on 100 parts by weight of the polyamide resin. When the content is less than 0.5 % by weight, the desired effect by the addition of the component (D) is not obtainable. When the content is more than 20 % by weight, on the other hand, the moldability is deteriorated and the appearance becomes worse.

In the component (D), the number of the aliphatic unsaturated bonds of mainly the block (b) is reduced as a result of the hydrogenation. The arrangement of the block (a) and block (b) may be in a linear structure or may contain a branched structure (radial tereblock). These structures may partially contain a random chain derived from a random copolymer moiety composed of a vinyl aromatic compound and a conjugated diene-based compound. Among these structures, a linear structure is preferred. From the viewpoint of the impact resistance, a block copolymer comprised of a (a)-(b)-(a) type triblock structure is particularly preferred. In this case, the block copolymer may additionally comprise a (a)-(b) type diblock structure.

As the monomer (vinyl aromatic compound) constituting the vinyl aromatic compound polymer block (a) of the component (D), there may be mentioned, for example, styrene, $\alpha$-methylstyrene, paramethylstyrene, vinyltoluene and vinylxylene. Above all, styrene is preferred. As the monomer (conjugated diene-based compound) constituting the conjugated diene-based compound polymer block (b) of the component (D), there may be generally mentioned 1,3-butadiene and 2-methyl-1,3-butadiene. The proportion of the repeating units derived from the vinyl aromatic compound in the component (D) is generally 10 to 70 % by weight, preferably 10 to 40 % by weight. The content of the unsaturated bonds in the component (D) is such that generally 20 % by weight or less, preferably 10 % by weight of less, of the aliphatic unsaturated bonds derived from the conjugated diene-based compound remain unhydrogenated. The aromatic unsaturated bonds derived from the vinyl aromatic compound may be hydrogenated in an amount of about 25 % by weight or less. The component (D) in which the monomer (conjugated diene-based compound) constituting the conjugated diene-based compound polymer block (b) is 1,3-butadiene is called styrene-ethylene/butylene-styrene copolymer (SEBS). Similarly, the component (D) using 2-methyl-1,3-butadiene is called styrene-ethylene/propylenestyrene copolymer (SEPS). Various these copolymers of a (a)-(b)-(a) triblock structure are commercially available and easily feasible.

With regard to the component (D), the number average molecular weight of the hydrogenated product of a block copolymer is generally 180,000 or less, preferably 120,000 or less. Too high a number average molecular weight in excess of 180,000 results in poor moldability and bad appearance. The lower limit of the number average molecular weight is generally 10,000.

For reasons of improved compatibility with the polyamide resin (A), it is preferred that the component (D) be used in a form modified with an unsaturated acid and/or a derivative thereof. To be more specific, the unsaturated acid may be an $\alpha,\beta$-unsaturated carboxylic acid such as acrylic acid, methacrylic acid, maleic acid, fumaric acid, tetrahydrophthalic acid, itaconic acid, citraconic acid, crotonic acid or nagic acid. The derivative of the unsaturated acid may be, for example, an acid anhydride, an acid halide, an amide, an imide or an ester. Specific examples of the derivative include malenyl chloride, maleimide, maleic anhydride, itaconic anhydride, citraconic anhydride, monomethyl maleate and dimethyl maleate. Above all, unsaturated dicarboxylic acids or anhydrides thereof are preferred. Maleic acid, itaconic acid and anhydrides thereof are particularly preferred.

In order to efficiently carry out the modification of the component (D) with an unsaturated acid and/or a derivative thereof, a free radical generator is preferably used. As the free radical generator, there may be mentioned, for example, an organic peroxide and an azo compound.

As the organic peroxide, there may be mentioned, for example, (a) hydroperoxides such as t-butyl hydroperoxide, cumene hydroperoxide, 2,5-dimethylhexane-2,5-dihydroperoxide, 1,1,3,3-tetramethylbutyl hydroperoxide, p-menthane hydroperoxide and diisopropylbenzene hydroperoxide; (b) dialkylperoxides such as 2,5-dimethyl-2,5-di(t-butylperoxy)hexyne-3, di-t-butylperoxide, t-butylcumylperoxide, 2,5-dimethyl-2,5-di(t-butylperoxy)hexane and dicumylperoxide; (c) peroxyketals such as 2,2-bis(t-butylperoxy)butane, 2,2-bis(t-butylperoxy)octane, 1,1-bis(t-butylperoxy)cyclohexane and 1,1-bis(t-butylperoxy)-3,3,5-trimethylhexane; (d) peroxyesters such as di-t-butylperoxyisophthalate, t-butylperoxybenzoate, t-butylperoxyacetate, 2,5-dimethyl-2,5-di(benzoylperoxy)hexane, t-butylperoxyisopropylcarbonate and t-butylperoxyisobutylate; and (e) diacylperoxides such as benzoylperoxide, m-toluoylperoxide, acetylperoxide and lauroylperoxide.

As the azo compound, there may be mentioned, for example, 2,2'-azobisisobutylonitrile, 2,2'-azobis(2-methylonitrile), 1,1'-azobis(cyclohexane-1-carbonitrile), 1-[(1-cyano-1-methylethyl)azo]formamide, 2-phenylazo-4-methoxy-2,4-dimethylvalelonitrile, 2,2'-azobis(2,4,4-trimethylpentane) and 2,2'-azobis(2-methylpropane). As the other radical generators, there may be mentioned dicumyl. From the standpoint of dimensional stability and impact resistance, a free radical generator having a half life temperature at 10 hours of at least 120°C is preferred. A free radical generator having a half life temperature at 10 hours of lower than 120°C is not preferred with respect to the dimensional stability and impact resistance.

In the present invention, the component (D) in a modified form may be used together with that in an unmodified form.

Further, the resin composition of the present invention can comprise an elastomer other than the component (D). Examples of the elastomer include known elastomers such as a polyolefin-based elastomer, a diene-based elastomer, a styrene-based elastomer other than the component (D), a polyamide-based elastomer, a polyester-based elastomer, a polyurethane-based elastomer, a fluorine-based elastomer and a silicone-based elastomer. These elastomers may be used in a modified form so as to be made compatible with the component (A).

In addition to the above-described components, various additives customarily employed in polyamide resin compositions, such as a flame retarding agent, a stabilizer, a pigment, a dye and a weatherability improving agent, may be suitably used, if necessary, for the purpose of the present invention. As the flame retarding agent, there may be used, for example, conventional phosphorus-type, halogen-type or silicone-type flame retarding agents. As the stabilizer, there may be mentioned a mixed stabilizer composed of a copper halide-type stabilizing agent (for example, copper iodide, copper chloride and copper bromide), and a metal-halide based stabilizing agent (for example, potassium iodide and potassium bromide), and an organic-type stabilizing agent (for example, hindered phenol-type and phosphite-type stabilizing agents).

A method for preparing the resin composition of the present invention is not specifically limited. The resin composition may be generally prepared by blending predetermined amounts of the above-described various components, the blend being subsequently melted and kneaded. The melting and kneading of the blend may be carried out by any known method. For example, a single-screw extruder, a twin-screw extruder, a Banbury mixer or similar devices may be used. In this case, all raw materials may be simultaneously fed to a base part of an extruder and melted and kneaded together. Alternately, resin components are first fed and melted, to which a glass fiber is side-fed and kneaded together. Additionally, there may be adopted a method in which two or more compounded masses having different additives or compositions are first pelletized and the resulting pellets are blended, or a method in which part of a powder component or components or part of a liquid component or components is blended separately from the other components.

The resin composition of the present invention shows a tensile strength of 200 MPa or higher as measured for an ISO test piece thereof. As a consequence of this feature, the resin composition of the present invention is useful as a material usable, as a substitute for metals, for parts of a portable electronic device. Namely, as a method for providing a resin composition usable as a substitute for metals for parts of a portable electronic device, there is a method in which the content of a glass fiber in the resin composition is made high. Further, as a method for solving a problem of warpage, there is a method in which a plate-like filler such as a glass flake is used as taught by the aforementioned prior art. It is true that these methods can improve the rigidity of molded articles and can give a modulus of elasticity which is near that of a metallic material. In this case, however, because of insufficient strength, the allowance for deformation is reduced. Further, there is caused a problem that the impact strength determined by a drop test of molded articles is insufficient. In contrast, the resin composition of the present invention, which has the above-mentioned feature, does not bring about the above problems and can withstand a deformation which is likely to occur in parts for portable electronic devices. In addition, the resin composition of the present invention can fully meet a demand for thin wall articles.

Parts for portable electronic device

A part for a portable electronic device according to the present invention comprises a molded article of the above-described resin composition of the present invention and is characterized in that the thickness of a flat portion of the molded article, excluding ribs thereof, is 1.2 mm or less on average. The part for a portable electronic device of the present invention is generally obtained by injection molding. The obtained part for a portable electronic device has such a feature that it has a high impact resistance and a high rigidity and excellent heat resistance and, additionally, is low in anisotropy and in warpage. Thus, the part for a portable electronic device of the present invention is effectively used as an inside structural body and as a casing of PDAs (such as electronic organizers and portable computers), pocket bells, cellular phones, PHSs, etc., and is particularly suited as a casing for portable electronic machines. Incidentally, the flat portion of the part for portable electronic devices may be provided with screw holes, etc.

In the case where the part for portable electronic devices of the present invention is desired to show EMI shield property, a carbon fiber, a metal fiber or a fiber (a glass fiber, a carbon fiber or an organic fiber) plated with a metal may be used together with the glass fiber. It is also possible to impart EMI shield property to the part for the portable electronic devices by electroconductive coating, metal plating or metal vapor deposition.

Examples

The present invention will be described in further detail below by way of examples and comparative examples. It should be noted, however, that the present invention is in no way limited to the examples but may be embodied in other forms so far as they do not depart from the gist of the present invention. Materials used in the following examples are as follows:

(1) Polyamide resin (MXD6):

"POLYAMIDE MXD6 #6000" (melting point: 243°C, relative viscosity: 2.14) manufactured by Mitsubishi Gas Chemical Company, Inc.

(2) Polyamide resin (PA66):

"ZYTEL 101" (relative viscosity: 3.0) manufactured by DuPont.

(3) Acid-modified hydrogenated product of block copolymer (Modified SEBS):

Modified SEBS obtained in Preparation Example 1 shown below was used.

(4) GFA (glass fiber having elongated cross-section):

Chopped strands "CSG 3PA-820S" [(aspect ratio = (major axis length (28 $\mu$m))/(minor axis length 7 $\mu$m) (nominal value specified by the manufacturer)) manufactured by Nitto Boseki Co., Ltd.

(5) GFB (glass fiber having cocoon-shaped cross-section):

Chopped strands "CSG 3PA-870S" (aspect ratio = (major axis length (20 $\mu$m))/(minor axis length 10 $\mu$m) (nominal value specified by the manufacturer, 2.0±0.3) manufactured by Nitto Boseki Co., Ltd.

(6) GFC (glass fiber having circular cross-section):

Chopped strands "CS03JAFT2" (fiber diameter: 10 $\mu$m, aspect ratio: 1 (nominal value specified by the manufacturer)) manufactured by Asahi Fiber Glass Co., Ltd.

(9) Talc A:

"MICELTON" (average diameter: 1.4 $\mu$m (nominal value specified by the manufacturer)) manufactured by Hayashi Kasei Co., Ltd.

(10) Talc B:

"MICRON WHITE 5000A" (average diameter: 4.1 $\mu$m (nominal value specified by the manufacturer)) manufactured by Hayashi Kasei Co., Ltd.

(11) Glass flake
"FLEKA REFG-301" (average diameter: about 600 $\mu$m (nominal value specified by the manufacturer)) manufactured by Nippon Sheet Glass Co., Ltd.

Releasing agent "LICOWAX E" (montanic acid ester) manufactured by Clariant Japan K. K.

Preparation Example 1

Preparation of acid-modified hydrogenation product of block copolymer:

A styrene-ethylene-butylene-styrene block copolymer (SEBS), maleic anhydride and a radical generator were uniformly mixed with a Henschel mixer. The obtained blend was melted and reacted using a twin-screw extruder (screw diameter: 30 mm, L/D: 42) at a cylinder temperature of 230°C and a screw rotational speed of 300 rpm and pelletized to obtain modified hydrogenated block copolymer (hereinafter referred to as modified SEBS). As the maleic anhydride, there was used maleic anhydride manufactured by Mitsubishi Chemical Corporation. As the radical generator, 1,3-bis(2-tert-butylperoxyisopropyl)benzene ("PERKADOX 14" manufactured by Kayaku Akuzo Corporation, half life temperature: 121°C) was used. The thus obtained modified SEBS was heated and dried under vacuum and then measured for its addition amount of maleic anhydride by titration with sodium methylate to reveal that the addition amount was 0.5 % by weight.

Examples 1 to 5 and Comparative Examples 1 to 10

Respective components were weighed to have a composition shown in Table 2. The weighed components except a fibrous filler were blended using a tumbler and the blend was fed to a base part of a twin-screw extruder ("TEM 35B" manufactured by Toshiba Kikai Co., Ltd.) and melted, to which a glass fiber was side-fed to obtain resin pellets. The extruder was set at a temperature of 280°C in a portion upstream of a side-feed portion and a temperature of 260°C in a portion downstream thereof.
Using the obtained pellets of each resin composition, an ISO tensile test piece (10 mm x 10 mm x 4 mm) was molded. For use as a bending test piece and a Charpy impact test piece, also prepared respectively are test pieces cut at both edges and test pieces with and without a notch in accordance with the ISO standard.
The above molding was carried out using an injection molding machine ("100T" manufactured by Fanuc Ltd.) at a setting temperature of the cylinder of 280°C (uniform) and a setting temperature of a mold temperature controller of 130°C. The injection rate was set at 300 mm/s in terms of a resin flow rate calculated from the cross-sectional area at the center part of the ISO tensile test piece. The operation was shifted to a pressure maintenance mode so as to perform VP shift when about 95 % by weight fill was reached. The pressure maintenance was performed for 25 seconds at a pressure of as high as 620 kgf/cm$^2$ while preventing the formation of flash.
In accordance with ISO527-1 and -2 standard, the test pieces were measured for their tensile strength, tensile elongation, flexural strength, flexural modulus of elasticity, Charpy notched impact strength and Charpy impact strength without notch. The results are shown in Table 2.
Test pieces for warpage evaluation were also prepared and tested for their warpage. Each of the test pieces for the evaluation was prepared as follows. Thus, a resin composition was filled in a cavity having a length and a width of each 100 mm and a thickness of 1 mm through a fan gate having a thickness of 0.8 mm and extending throughout one side length (100 mm) of the cavity, and molded therein. After cooling, the molded product was taken out from the mold without cutting the gate portion to give the test piece. The above molding was carried out using an injection molding machine ("100T" manufactured by Fanuc Ltd.) at a setting temperature of the cylinder of 280°C (uniform), a setting temperature of a mold temperature controller of 130°C, an injection time of 15 seconds and a cooling time of 30 seconds.

The warpage test was carried out as follows. Namely, a test piece was allowed to stand at 25°C under a humidity of 65 % for day and night. The resulting test piece was then rested on a horizontal plane and measured for the distance between the side end opposite to the fan gate-side side end and the horizontal plane, as a hoisted height (warpage), with the fan gate-side side end as a base. The hoisted height was evaluated based on the four ratings shown below. The results are shown in Table 2.

Table 1

| A | 0 mm < hoisted height ≤ 0.5 mm |
|---|---|
| B | 0.5 mm < hoisted height ≤ 1.0 mm |
| C | 1.0 mm < hoisted height ≤ 3.0 mm |
| D | 3.0 mm < hoisted height |

Table 2

| | | | Example | | | | |
|---|---|---|---|---|---|---|---|
| | | | 1* | 2* | 3* | 4 | 5 |
| Composition (% by weight) | Polyamide resin | MXD6 | 39.4 | 39.4 | – | – | – |
| | | MP6 | – | – | – | 44.9 | 41.9 |
| | | PA66 | 5 | 5 | – | – | – |
| | | PA6 | – | – | 49.9 | – | – |
| | Elastomer | SEBS | – | – | – | – | 3 |
| | Glass fiber | GFA | 55 | 25 | 50 | 55 | 55 |
| | | GFB | – | – | – | – | – |
| | | GFC | – | 30 | – | – | – |
| | Glass flake | | – | – | – | – | – |
| | Nucleating agent | Talc A | 0.5 | 0.5 | – | – | – |
| | | Talc B | – | – | – | 0.5 | – |
| | Releasing agent | | 0.1 | 0.1 | 0.1 | 0.1 | 0.1 |
| Physical Property Values | Tensile strength | MPa | 265 | 266 | 220 | 255 | 252 |
| | Elongation | % | 1.7 | 1.7 | 2.7 | 1.44 | 1.5 |
| | Flexural strength | MPa | 420 | 412 | 343 | 422 | 382 |
| | Flexural modulus of elasticity | GPa | 20.4 | 20.1 | 15.6 | 22.3 | 19.1 |
| | Charpy notched impact strength | $kJ/m^2$ | 23.1 | 20.1 | 15.9 | 18.9 | 22.9 |
| | Charpy impact strength without notch | $kJ/m^2$ | 66 | 68 | 85 | 61 | 82 |
| | Warpage | – | A | A | A | A | A |

*Examples not falling within the scope of the inventzion as claimed

Table 2 (continued)

| | | | Comparative Example | | | | |
|---|---|---|---|---|---|---|---|
| | | | 1 | 2 | 3 | 4 | 5 |
| Compo-sition (% by weight) | Polyamide resin | MXD6 | 39.4 | 39.4 | 39.4 | 39.4 | 39.4 |
| | | MP6 | – | – | – | – | – |
| | | PA66 | 5 | 5 | 5 | 5 | 5 |
| | | PA6 | – | – | – | – | – |
| | Elastomer | SEBS | – | – | – | – | – |
| | Glass fiber | GFA | – | – | – | – | 15 |
| | | GFB | 55 | – | – | – | – |
| | | GFC | – | 55 | 25 | 40 | 40 |
| | Glass flake | | – | – | 30 | 15 | – |
| | Nucleating agent | Talc A | 0.5 | 0.5 | 0.5 | 0.5 | 0.5 |
| | | Talc B | – | – | – | – | – |
| | Releasing agent | | 0.1 | 0.1 | 0.1 | 0.1 | 0.1 |
| Physical Property Values | Tensile strength | MPa | 263 | 268 | 168 | 211 | 269 |
| | Elongation | % | 1.8 | 1.7 | 1.0 | 1.2 | 1.8 |
| | Flexural strength | MPa | 418 | 409 | 285 | 330 | 407 |
| | Flexural modulus of elasticity | GPa | 19.8 | 19.9 | 17.6 | 18.3 | 20.0 |
| | Charpy notched impact strength | $kJ/m^2$ | 19.0 | 13.9 | 6.8 | 10.1 | 15.2 |
| | Charpy impact strength without notch | $kJ/m^2$ | 72 | 75 | 37 | 55 | 70 |
| | Warpage | – | B | D | A | B | C |

## Table 2 (continued)

| | | | Comparative Example | | | | |
|---|---|---|---|---|---|---|---|
| | | | 6 | 7 | 8 | 9 | 10 |
| Composition (% by weight) | Polyamide resin | MXD6 | 39.4 | 72.4 | 72.9 | 26.4 | – |
| | | MP6 | – | – | – | – | – |
| | | PA66 | 5 | 7 | 7 | 3 | – |
| | | PA6 | – | – | – | – | 49.9 |
| | Elastomer | SEBS | – | – | – | – | – |
| | Glass fiber | GFA | – | 20 | – | 70 | – |
| | | GFB | 25 | – | – | – | – |
| | | GFC | 30 | – | 20 | – | 50 |
| | Glass flake | | – | – | – | – | – |
| | Nucleating agent | Talc A | 0.5 | 0.5 | – | 0.5 | – |
| | | Talc B | – | – | – | – | – |
| | Releasing agent | | 0.1 | 0.1 | 0.1 | 0.1 | 0.1 |
| Physical Property Values | Tensile strength | MPa | 268 | 155 | 154 | – | 225 |
| | Elongation | % | 1.7 | 1.9 | 1.9 | – | 3.0 |
| | Flexural strength | MPa | 411 | 210 | 201 | – | 339 |
| | Flexural modulus of elasticity | GPa | 20.2 | 9.0 | 8.9 | – | 14.8 |
| | Charpy notched impact strength | $kJ/m^2$ | 14.9 | 5.4 | 5.2 | – | 15.1 |
| | Charpy impact strength without notch | $kJ/m^2$ | 68 | 30 | 28 | – | 120 |
| | Warpage | | – | C | A | D | – | D |

Examples 1 to 5 use a glass fiber (GFA) having an elongated cross-section as specified in the present invention and, therefore, provide a merit that the tensile strength, flexural strength, flexural modulus of elasticity and impact strength are high and the elongation and warpage are low. Thus, the inventive compositions are suited for use as a part for portable electronic devices.

On the other hand, when a glass fiber (GFC) having a circular cross-section, which is an ordinary glass fiber, is used (Comparative Examples 2, 8 and 10), or when a glass fiber (GFB) having an elongated cross-section with a low aspect ratio is used (Comparative Examples 1 and 6), significant defects are seen particularly in warpage and impact strength. Therefore, they are ill-suited for use as a part for portable electronic devices.

In Comparative Example 3, a glass flake which is conventionally known to reduce warpage is used in a large amount together with a glass fiber (GFC) having a circular cross-section. In this case, although the warpage is reduced because of the use of a large amount of the glass flake, the strength is considerably inferior as compared with that in Example 1. In Comparative Example 4, in which the using amount of the glass flake is reduced as compared with Comparative Example 3, an effect of preventing warpage is insufficient.

In Comparative Example 5, a glass fiber (GFA) having an elongated cross-section is used together with a glass fiber (GFC) having a circular cross-section. Because the using proportion of these components does not fall within the range specified by the present invention, however, Comparative Example 5 is evaluated as being inferior particularly with respect to warpage and impact strength as compared with those in Examples.

Comparative Example 6, in which a glass fiber having an elongated cross-section with a low aspect ratio is used, is evaluated as being inferior particularly with respect to warpage and impact strength as compared with those in Examples.

In Comparative Example 7, a glass fiber (GFA) having an elongated cross-section as specified in the present invention is used. However, because the using proportion of the glass fiber is excessively small, the ISO tensile strength is small and, therefore, the other strength values are insufficient. In Comparative Example 9, a glass fiber having an elongated cross-section (GFA) as specified in the present invention is used. However, because the using proportion of the glass fiber is excessively large, extrusion was not able to be performed.

**Claims**

1. A polyamide resin composition for a portable electronic device, comprising:

    (A) a polyamide resin,
    (B) a glass fiber having an elongated cross-section with an aspect ratio of 2.5 or more, said aspect ratio being defined by the formula shown below, and optionally
    (C) a glass fiber having a circular cross-section with a diameter of 3 to 30 $\mu$m,

    the ratio (by weight) of the component (B) to the component (C) being 3:7 to 10:0,
    the proportion of the component (A) being 60 to 34 % by weight, and the proportion of the component (B) or the proportion of the sum of the components (B) and (C) being 40 to 66 % by weight with the proviso that the total sum of the above components is 100 % by weight,
    which polyamide resin composition shows a tensile strength of 200 MPa or higher as measured for an ISO test piece thereof according to ISO 527-1, -2,
    wherein polyamide resin of component (A) consists of of at least one polyamide resin selected from the group consisting of polyhexamethylene terephthalamide (polyamide 6T), polyhexamethylene isophthalamide (polyamide 6I), polymetaxylylene adipamide (polyamide MXD6), polymetaxylylene dodecamide (polyamide MXD10), polyamide 9T, polymetaxylylene adipamide/polyparaxylylene adipamide copolymer (polyamide MP6), polymetaxylylene adipamide/polymetaxylylene isophthalamide copolymer (polyamide MXD6/MXDI), polyhexamethylene terephthalamide/poly-2-methyl-pentamethylene terephthalamide copolymer (polyamide 6T/M5T), and polyhexamethylene terephthalamide/polyhexamethylene isophthalamide copolymer (polyamide 6T/6I);

$$\text{aspect ratio} = (\text{Major axis length D2 of the cross-section of the glass fiber})/(\text{Minor axis length D1 of the cross-section of the glass fiber}).$$

2. A resin composition according to claim 1, wherein the proportion of the component (B) is 25 to 66 % by weight based on a total weight of the components (A) and (B) or a total weight of the components (A), (B) and (C).

3. A resin composition according to claim 1 or 2, wherein the minor axis diameter D1 of the glass fiber (B) is 3 $\mu$m or more and said aspect ratio is 3 or more.

4. A resin composition according to any one of claims 1 to 3, wherein the polyamide resin is a polyamide MX resin.

5. A resin composition according to any one of claims 1 to 4, further comprising:

    (D) a hydrogenated product of a block copolymer comprised of (a) a vinyl aromatic compound polymer block and (b) a conjugated diene-based compound polymer block, said hydrogenated product being present in a proportion of 0.5 to 20 parts by weight per 100 parts by weight of the polyamide resins (A).

6. A resin composition according to any one of claims 1 to 5, wherein a hoisted height of warpage test piece formed by molding the resin composition as defined in any one of claims 1 to 8 is not more than 0.5 mm

7. A resin composition according to any one of claims 1 to 6, wherein the resin composition further comprises talc having an average particle diameter of 2 μm or less, said talc being present in a proportion of 0.1 to 8 parts by weight per 100 parts by weight of a total amount of the components (A) and (B) or per 100 parts by weight of a total amount of the components (A), (B) and (C).

8. A portable electronic device part comprising a molded article of a resin composition as defined in any one of claims 1 to 7, the thickness of a flat portion of said molded article, excluding ribs thereof, being 1.2 mm or less on average.

9. A portable electronic device part according to claim 8, wherein said part is used as a casing of the portable electronic device.

**Patentansprüche**

1. Polyamid-Harzzusammensetzung für ein portables elektronisches Gerät, umfassend:

   (A) ein Polyamidharz,
   (B) eine Glasfaser mit einem langgestreckten Querschnitt mit einem Seitenverhältnis von 2,5 oder mehr, wobei das Seitenverhältnis durch die unten gezeigte Formel definiert ist, und optional
   (C) eine Glasfaser mit kreisförmigem Querschnitt mit einem Durchmesser von 3 bis 30 μm,

   wobei das Gewichtsverhältnis der Komponente (B) zur Komponente (C) 3:7 bis 10:0 ist,
   der Anteil der Komponente (A) 60 bis 34 Gew.% beträgt, und der Anteil der Komponente (B) oder der Anteil der Summe der Komponenten (B) und (C) 40 bis 66 Gew.% beträgt, vorausgesetzt, dass die Gesamtsumme der obigen Komponenten 100 Gew.% beträgt,
   wobei die Polyamid-Harzzusammensetzung eine Zugfestigkeit von 200 MPa oder höher aufweist, gemessen für ein ISO-Teststück gemäß ISO 527-1, -2,
   worin das Polyamidharz der Komponente (A) aus mindestens einem Polyamidharz ausgewählt aus der Gruppe, bestehend aus Polyhexamethylenterephthalamid (Polyamid 6T), Polyhexamethylenisophthalamid (Polyamid 6I), Polymetaxylylenadipamid (Polyamid MXD6), Polymethaxylylendodecamid (Polyamid MXD10), Polyamid 9T, Polymetaxylylenadipamid/Polyparaxylylenadipamid-Copolymer (Polyamid MP6), Polymetaxylylenadipamid/Polymetaxylylenisophthalamid-Copolymer (Polyamid MXD6/MXDI), Polyhexamethylenterephthalamid/Poly-2-methylpentamethylenterephthalamid-Copolymer (Polyamid 6T/M5T) und Polyhexamethylenterephthalamid/ Polyhexamethylenisophthalamid-Copolymer (Polyamid 6T/6I) besteht;
   Seitenverhältnis = (Länge der größeren Achse D2 des Querschnitts der Glasfaser)/(Länge der kleineren Achse D1 des Querschnitts der Glasfaser).

2. Harzzusammensetzung gemäß Anspruch 1, worin der Anteil der Komponente (B) 25 bis 66 Gew.% auf Basis des Gesamtgewichts der Komponenten (A) und (B) oder des Gesamtgewichts der Komponenten (A), (B) und (C) beträgt.

3. Harzzusammensetzung gemäß Anspruch 1 oder 2, worin der Durchmesser der kleineren Achse D1 der Glasfaser (B) 3 μm oder mehr beträgt und das Seitenverhältnis 3 oder mehr beträgt.

4. Harzzusammensetzung gemäß irgendeinem der Ansprüche 1 bis 3, worin das Polyamidharz ein Polyamid-MX-Harz ist.

5. Harzzusammensetzung gemäß irgendeinem der Ansprüche 1 bis 4, die weiterhin umfasst:

   (D) ein hydriertes Produkt eines Block-Copolymers, das (a) einen Polymerblock aus einer Vinyl-aromatischen Verbindung und (b) einen Polymerblock aus einer Verbindung auf Basis eines konjugierten Diens umfasst, wobei das hydrierte Produkt in einem Anteil von 0,5 bis 20 Gew.-Teilen pro 100 Gew.-Teilen der Polyamidharze (A) vorhanden ist.

**6.** Harzzusammensetzung gemäß irgendeinem der Ansprüche 1 bis 5, worin die Hebungshöhe eines Verzugs-Teststücks, das durch Formen der Harzzusammensetzung gemäß irgendeinem der Ansprüche 1 bis 5 gebildet wird, nicht mehr als 0,5 mm beträgt.

**7.** Harzzusammensetzung gemäß irgendeinem der Ansprüche 1 bis 6, worin die Harzzusammensetzung weiterhin Talk mit einem mittleren Teilchendurchmesser von 2 μm oder weniger umfasst, wobei der Talk in einem Anteil von 0,1 bis 8 Gew.-Teilen pro 100 Gew.-Teilen der Gesamtmenge der Komponenten (A) und (B) oder pro 100 Gew.-Teilen der Gesamtmenge der Komponenten (A), (B) und (C) vorhanden ist.

**8.** Element eines portablen elektronischen Geräts, das ein geformtes Erzeugnis aus einer Harzzusammensetzung gemäß irgendeinem der Ansprüche 1 bis 7 umfasst, worin die Dicke eines flachen Abschnitts des geformten Erzeugnisses, außer dessen Rippen, im Mittel 1,2 mm oder weniger beträgt.

**9.** Portables elektronisches Gerät gemäß Anspruch 8, worin das Element als Gehäuse des portablen elektronischen Geräts eingesetzt wird.

**Revendications**

**1.** Composition de résine de polyamide destinée à un appareil électronique portable, comprenant :

(A) une résine de polyamide,
(B) une fibre de verre ayant une coupe transversale allongée avec un rapport d'aspect de 2,5 ou plus, ledit rapport d'aspect étant défini par la formule présentée ci-dessous, et éventuellement
(C) une fibre de verre ayant une coupe transversale circulaire d'un diamètre de 3 à 30 μm,

le rapport (en poids) du composant (B) au composant (C) étant de 3:7 à 10:0,
la proportion du composant (A) étant de 60 à 34 % en poids et la proportion du composant (B) ou la proportion de la somme des composants (B) et (C) étant de 40 à 66 % en poids, à condition que la somme totale des composants ci-dessus soit de 100 % en poids,
laquelle composition de résine de polyamide présente une résistance à la traction de 200 MPa ou plus, mesurée sur une éprouvette d'essai ISO de celle-ci selon la norme ISO 527-1, -2,
dans laquelle la résine de polyamide du composant (A) est constituée d'au moins une résine de polyamide choisie dans le groupe constitué du poly(téréphtalamide d'hexaméthylène) (polyamide 6T), du poly(isophtalamide d'hexaméthylène) (polyamide 6I), du poly(adipamide de métaxylylène) (polyamide MXD6), du poly(dodécamide de métaxylylène) (polyamide MXD10), du polyamide 9T, du copolymère de poly(adipamide de métaxylylène) /poly(adipamide de paraxylylène) (polyamide MP6), du copolymère de poly(adipamide de métaxylylène /poly(isophtalamide de métaxylylène) (polyamide MXD6/MXDI), du copolymère de poly(téréphtalamide d'hexaméthylène) /poly(téréphtalamide de 2-méthyl-pentaméthylène) (polyamide 6T/M5T) et du copolymère de poly(téréphtalamide d'hexaméthylène /poly(isophtalamide d'hexaméthylène) (polyamide 6T/6I) ;
rapport d'aspect = (longueur de l'axe majeur D2 de la coupe transversale de la fibre de verre)/(longueur de l'axe mineur D1 de la coupe transversale de la fibre de verre).

**2.** Composition de résine selon la revendication 1, dans laquelle la proportion du composant (B) est de 25 à 66 % en poids par rapport au poids total des composants (A) et (B) ou au poids total des composants (A), (B) et (C).

**3.** Composition de résine selon la revendication 1 ou 2, dans laquelle le diamètre de l'axe mineur D1 de la fibre de verre (B) est de 3 μm ou plus et ledit rapport d'aspect est de 3 ou plus.

**4.** Composition de résine selon l'une quelconque des revendications 1 à 3, dans laquelle la résine de polyamide est une résine de polyamide MX.

**5.** Composition de résine selon l'une quelconque des revendications 1 à 4, comprenant en outre :

(D) un produit hydrogéné d'un copolymère séquencé constitué de (a) un bloc polymère d'un composé aromatique vinylique et (b) un bloc polymère d'un composé à base d'un diène conjugué, ledit produit hydrogéné étant présent en proportion de 0,5 à 20 parties en poids pour 100 parties en poids de la résine de polyamide (A).

**6.** Composition de résine selon l'une quelconque des revendications 1 à 5, dans laquelle la hauteur de soulèvement de l'éprouvette d'essai de gauchissement formée par moulage de la composition de résine définie dans l'une quelconque des revendications 1 à 8 n'est pas supérieure à 0,5 mm.

**7.** Composition de résine selon l'une quelconque des revendications 1 à 6, dans laquelle la composition de résine comprend en outre du talc ayant un diamètre particulaire moyen de 2 μm ou moins, ledit talc étant présent en proportion de 0,1 à 8 parties en poids pour 100 parties en poids de la quantité totale des composants (A) et (B) ou pour 100 parties en poids de la quantité totale des composants (A), (B) et (C).

**8.** Pièce de dispositif électronique portable comprenant un article moulé d'une composition de résine définie dans l'une quelconque des revendications 1 à 7, l'épaisseur de la partie plate dudit article moulé, à l'exclusion de ses nervures, étant de 1,2 mm ou moins en moyenne.

**9.** Pièce de dispositif électronique portable selon la revendication 8, dans laquelle ladite pièce est utilisée comme boîtier du dispositif électronique portable.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7018186 A
- JP 1263151 A
- JP 62268612 A
- JP 10219026 A
- JP 2173047 A
- JP 2003082228 A
- JP 2003201398 A
- JP 2004168849 A
- EP 1939254 A1
- JP 3059019 B
- JP 4013300 B
- JP 4032775 B